# EUROPEAN PATENT APPLICATION

(11) **EP 4 803 402 A1**
(43) Date of publication of application: **09.09.2026**
(21) Application number: 26154584.2
(22) Date of filing: 28.01.2026
(51) Int. Cl.: B62D 6/00, B62D 7/15

(54) **METHOD, SYSTEM, MEDIUM, PROGRAM PRODUCT FOR VEHICLE CONTROL AND VEHICLE**

(30) Priority: 07.03.2025 CN 202510276138
(71) Applicant: Volvo Car Corporation, 405 31 Göteborg (SE)
(72) Inventor: LIN, Zhisheng, Shanghai, 201815 (CN); YU, Hongchao, Shanghai, 201815 (CN); XU, Wentao, Shanghai, 201815 (CN)
(74) Representative: Kransell & Wennborg KB

(57) **Abstract**

The present disclosure discloses a method, system, storage medium, program product for vehicle control, and a vehicle. The method comprises: receiving a continuous variation range of a lateral dynamics-related parameter of a vehicle; determining a rear wheel steering angle of the vehicle based on the continuous variation range of the lateral dynamics-related parameter and a current state of the vehicle; and controlling steering of rear wheels of the vehicle based on the determined rear wheel steering angle.

## Description

### CROSS-REFERENCES TO RELATED APPLICATIONS

The present application claims priority to the Chinese Patent Application No. 202510276138.2, filed March 07, 2025, and entitled "METHOD, SYSTEM, MEDIUM, PROGRAM PRODUCT FOR VEHICLE CONTROL AND VEHICLE".

### TECHNICAL FIELD

The present disclosure relates to the field of vehicles, and more particularly, to a method, system, storage medium, program product for vehicle control and a vehicle.

### BACKGROUND

Most current vehicles provide a continuous adjustment of the longitudinal dynamics of the vehicles. For example, many vehicles provide a continuous adjustment of a longitudinal throttle response, a front-rear drive distribution ratio, and the like. In lateral dynamics, the prior art provides only some fixed mode choices, such as providing light/medium/heavy steering feel options or flexible/neutral/stable electronic stability control options, but does not provide a continuous adjustment of vehicle lateral dynamics, such as agility (i.e., yaw rate response), turning radius, etc. Therefore, existing vehicles cannot meet different users' requirements for driving dynamics. For example, the user may wish for a continuous yaw rate response between fixed modes provided or for the turning radius to change as desired.

### SUMMARY

Based on the above, the present disclosure provides a method, system, storage medium, program product for vehicle control, and a vehicle.

In one aspect, the present disclosure provides a method for vehicle control, the method comprising: receiving a continuous variation range of a lateral dynamics-related parameter of the vehicle; determining a rear wheel steering angle of the vehicle based on the continuous variation range of the lateral dynamics-related parameter and a current state of the vehicle; and controlling steering of rear wheels of the vehicle based on the determined rear wheel steering angle.

In another aspect, the present disclosure provides a system for vehicle control, comprising: means for receiving a continuous variation range of a lateral dynamics-related parameter of the vehicle; means for determining a rear wheel steering angle of the vehicle based on the continuous variation range of the lateral dynamics-related parameter and a current state of the vehicle; and means for controlling steering of rear wheels of the vehicle based on the determined rear wheel steering angle.

In another aspect, the present disclosure provides a system for vehicle control, including a memory having computer instructions stored thereon, and a processor configured to execute the instructions to implement a method for vehicle control according to an embodiment of the present disclosure.

In another aspect, the present disclosure provides a vehicle comprising: a user interface for receiving a continuous variation range of a lateral dynamics-related parameter of the vehicle; and a system for vehicle control according to an embodiment of the present disclosure.

In another aspect, the present disclosure provides a computer-readable storage medium having instructions stored thereon that, when executed by a processor, implement a method for vehicle control according to an embodiment of the present disclosure.

In another aspect, the present disclosure provides a computer program product including instructions that, when executed by a processor, implement a method for vehicle control according to an embodiment of the present disclosure.

The present disclosure provides a method, system, storage medium, program product for vehicle control, and a vehicle. The method for vehicle control according to an embodiment of the present disclosure can receive a continuous variation range of a lateral dynamics-related parameter, and based on the received continuous variation range of the lateral dynamics-related parameter, carry out a user-customized continuous adjustment of the lateral dynamics of the vehicle through steering of rear wheels, thereby meeting different users' requirements for driving dynamics and improving the user's driving experience.

### BRIEF DESCRIPTION OF DRAWINGS

In order to explain the technical solutions of the embodiments of the present disclosure more clearly, the drawings of the embodiments will be briefly introduced below. Obviously, the drawings in the following description relate only to some embodiments of the present disclosure and do not limit the present disclosure.
Fig. 1 is an example flowchart of a method for vehicle control according to an embodiment of the present disclosure.
Fig. 2 is a schematic diagram illustrating the lateral direction and the longitudinal direction of the vehicle.
Figs. 3A and 3B illustrate example user interfaces for receiving a continuous variation range of a lateral dynamics-related parameter of a vehicle according to an embodiment of the present disclosure.
Fig. 4 is an example flowchart for determining a rear wheel steering angle of a vehicle according to an embodiment of the present disclosure.
Fig. 5 is an example schematic diagram illustrating a correspondence between a desired vehicle wheelbase and a vehicle speed according to an embodiment of the present disclosure.
Fig. 6 is an example diagram illustrating a correspondence between a desired vehicle stability factor and a vehicle speed according to an embodiment of the present disclosure.
Fig. 7 is a schematic diagram illustrating the principle of second-order Runge-Kutta integration.
Fig. 8 is an example system diagram of a method for vehicle control according to an embodiment of the present disclosure.
Fig. 9 illustrates an example system for vehicle control according to an embodiment of the present disclosure.

### DETAILED DESCRIPTION

In order to make the purpose, technical solutions, and advantages of the technical solutions of the present disclosure clearer, the technical solutions of the embodiments of the present disclosure will be clearly and completely described below in conjunction with the accompanying drawings of specific embodiments of the present disclosure. The same reference numbers in the drawings represent the same parts. It should be noted that the described embodiments are some, but not all, of the embodiments of the present disclosure. Based on the described embodiments of the present disclosure, all other embodiments obtained by those of ordinary skill in the art without creative efforts fall within the scope of protection of the present disclosure.

Unless otherwise defined, technical or scientific terms used herein shall have their ordinary meaning as understood by those of ordinary skill in the art to which this disclosure belongs. The terms "first", "second", and similar words used in the specification and claims of this disclosure do not indicate any order, quantity, or importance, but are only used to distinguish different components. Likewise, words such as "a" or "an" and the like do not necessarily indicate a quantitative limitation. Words such as "include" or "comprise" mean that the elements or items appearing before the word include the elements or items listed after the word and their equivalents, without excluding other elements or items. Words such as "connect" or "link" are not limited to physical or mechanical connections, but may include electrical connections, whether direct or indirect. "Up", "down", "left", "right", etc., are only used to express relative positional relationships. When the absolute position of the described object changes, the relative positional relationship may also change accordingly.

As mentioned above, existing vehicles do not provide a continuous adjustment of the lateral dynamics of the vehicles, and only provide some fixed modes from which to select. For example, the light/medium/heavy steering feel options can be achieved through the adjustment of the assist force level of the front wheel steering motor, and the flexible/neutral/stable electronic stability control options can be achieved through the intervention timing of the braking system. Although existing vehicles can be adjusted so that the lateral dynamics of the vehicle can be changed between oversteer and understeer by adjusting the front-rear drive distribution ratio, the oversteer or understeer characteristics of the vehicles are fixed and cannot be continuously varied after the front-rear drive distribution ratio has been set.

Based on these, the present disclosure provides a method, system, storage medium, program product for vehicle control, and a vehicle. The method for vehicle control according to an embodiment of the present disclosure may receive a continuous variation range of a lateral dynamics-related parameter(s) through a user interface of the vehicle (e.g., a human machine interface (HMI) of the vehicle), based on the received continuous variation range of the lateral dynamics-related parameter, enable user-customized continuous adjustment of the lateral dynamics of the vehicle through rear wheel steering. Because the lateral dynamics of the vehicle are adjusted by adjusting the rear wheel steering of the vehicle, the method can achieve user-customized continuous adjustment of the lateral dynamics of the vehicle without affecting the driver's front wheel steering input, thereby satisfying different users' requirements for driving dynamics and improving users' driving experience.

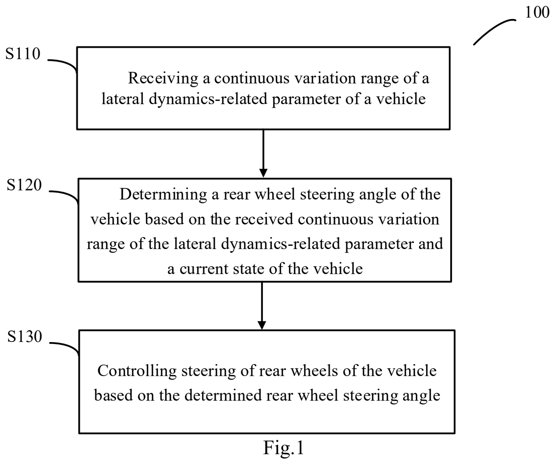

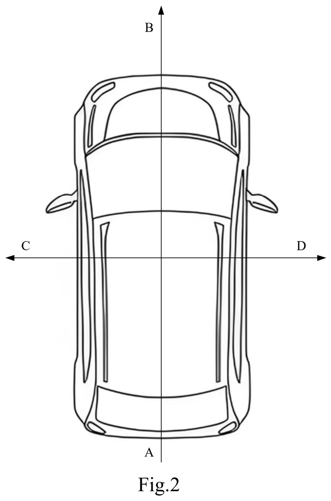

Fig. 1 shows an example flowchart of a method 100 for vehicle control according to an embodiment of the present disclosure. The method 100 for vehicle control according to the embodiment of the present disclosure is applicable to a vehicle whose rear wheels can rotate in the lateral direction of the vehicle (i.e., a vehicle with rear wheel steering). In the present disclosure, the longitudinal direction of the vehicle is the direction along the front-rear axis of the vehicle body, that is, the direction from the rear to the front, as shown by arrow AB in Fig. 2. The lateral direction of the vehicle is along the left-right axis of the vehicle body, that is, perpendicular to the longitudinal direction, pointing to the right or left side of the vehicle (as shown by the double arrow CD in Fig. 2). In the present disclosure, a lateral dynamics-related parameter may be any parameter related to the lateral dynamics of the vehicle. For example, the lateral dynamics-related parameter may be a lateral dynamics parameter representing the motion characteristic of the vehicle in its lateral direction, such as the turning radius of the vehicle, the agility of the vehicle, the yaw rate, etc. For another example, the lateral dynamics-related parameter may be a parameter representing an inherent attribute of the vehicle that may affect the lateral dynamics of the vehicle, such as the vehicle mass, the vehicle wheelbase and/or the vehicle stability factor, etc. involved in the state space equation of the vehicle. In the present disclosure, the longitudinal dynamics parameter(s) may be a parameter representing the motion characteristic of the vehicle in its longitudinal direction, such as the vehicle speed, longitudinal acceleration, driving force, etc. of the vehicle.

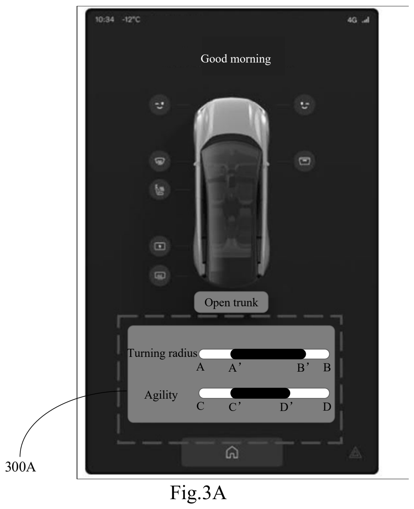

As shown in Fig. 1, the method 100 for vehicle control according to the embodiment of the present disclosure may start from step S110. At step S110, a continuous variation range of a lateral dynamics-related parameter of the vehicle is received. Exemplarily, the continuous variation range of the lateral dynamics-related parameter of the vehicle desired by the user may be received from the user through the user interface of the vehicle. For example, in a case where the lateral dynamics-related parameter include turning radius and agility, a continuous variation range of the turning radius and/or a continuous variation range of the agility may be received via turning radius and agility adjustment bars on the user interface 300A of the vehicle as shown in Fig. 3A. In the example shown in Fig. 3A, the user can input the desired continuous variation range A'-B' of the turning radius by adjusting the starting point A' and the ending point B' of the turning radius. Similarly, the user can input a desired continuous variation range C'-D' of agility by adjusting the starting point C' and the ending point D' of the agility.

At step S120, a rear wheel steering angle of the vehicle is determined based on the continuous variation range of the lateral dynamics-related parameter and a current motion state of the vehicle. The current state of the vehicle can represent a current motion state of the vehicle, which can be represented by relevant motion parameters (such as the vehicle speed, the longitudinal acceleration, the lateral acceleration, the steering wheel rotation angle of the vehicle, etc.).

In one embodiment, determining the rear wheel steering angle of the vehicle may comprise: determining, based on the continuous variation range of the received lateral dynamics-related parameter (e.g., a continuous variation range of a turning radius of the vehicle), a correspondence between the lateral dynamics-related parameter and a longitudinal dynamics parameter of the vehicle that may be measured continuously over time (e.g., a vehicle speed); according to the determined correspondence, determining a current value of the lateral dynamics-related parameter corresponding to a current value of the longitudinal dynamics parameter which is measured continuously over time, based on the current value of the longitudinal dynamics parameter, and then determining the rear wheel steering angle of the vehicle based on the current value of the lateral dynamics-related parameter and the current state of the vehicle.

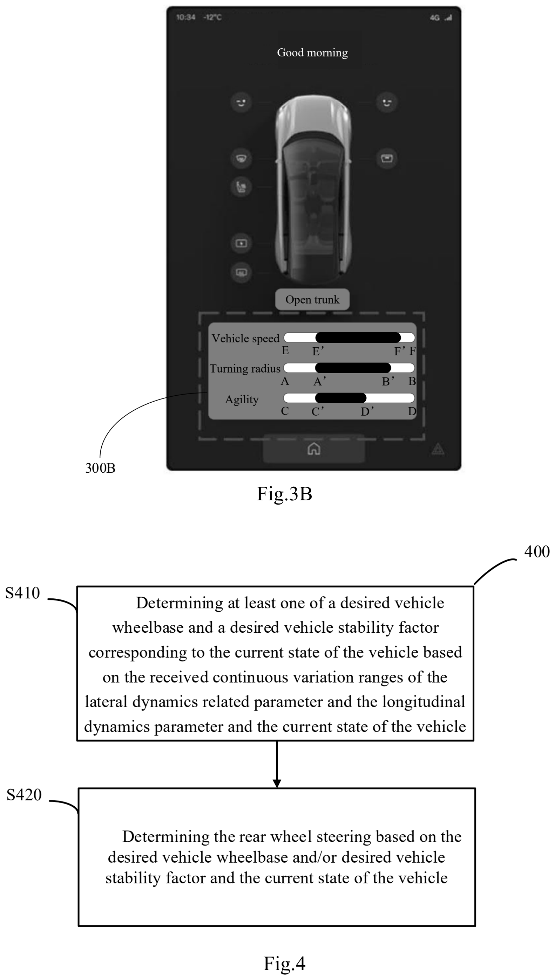

Regarding determining the correspondence between the lateral dynamics-related parameter and the longitudinal dynamics parameter, which is measured continuously over time, exemplarily, the correspondence (e.g., a linear correspondence) may be determined based on the received continuous variation range of the lateral dynamics-related parameter and a continuous variation range of the longitudinal dynamics parameter of the vehicle, which is measured continuously over time. In an embodiment, the continuous variation range of the longitudinal dynamics parameter may be a preset fixed range. In another embodiment, the longitudinal dynamics parameter and its continuous variation range may be input by the user. In this case, the determination of the rear wheel steering angle of the vehicle is further based on the received continuous variation range of the longitudinal dynamics parameter. For example, as shown in Fig. 3B, in addition to the continuous variation range of the lateral dynamics-related parameter (i.e., the turning radius and the agility of the vehicle), a continuous variation range of the vehicle speed may be received via the user interface 300B, as the received continuous variation range of the longitudinal dynamics parameter. Similar to the reception of the continuous variation range of the lateral dynamics-related parameter described above, the user can input the continuous variation range E'-F' of the vehicle speed by adjusting the starting point E' and the ending point F' of the vehicle speed adjustment bar shown in Fig. 3B.

Regarding determining the rear wheel steering angle of the vehicle based on the determined current value of the lateral dynamics-related parameter and the current state of the vehicle, exemplarily, a mapping table between the lateral dynamics-related parameter of the vehicle and the state of the vehicle and the rear wheel steering angle may be constructed in advance through testing or the like. The rear wheel steering angle of the vehicle is then determined by looking up this pre-constructed mapping table, using the determined current value of the lateral dynamics-related parameter and the current state of the vehicle as indices.

Alternatively, in the above method, time can also be used to replace the longitudinal dynamics parameter which can be measured continuously over time. For example, the correspondence between the lateral dynamics-related parameter and the time can be determined based on the input continuous variation range of the lateral dynamics-related parameter, and then the rear wheel steering angle of the vehicle can be determined based on the correspondence.

In another embodiment, determining the rear wheel steering angle of the vehicle may comprise: determining a desired vehicle wheelbase and a desired vehicle stability factor corresponding to the current state of the vehicle, based on the received continuous variation ranges of the lateral dynamics-related parameter and the longitudinal dynamics parameter and the current state of the vehicle; and then determining the rear wheel steering angle of the vehicle based on the determined desired vehicle wheelbase and desired vehicle stability factor, which will be described in detail below with reference to Figs. 4-7.

At step S130, steering of rear wheels of the vehicle is(are) controlled based on the determined rear wheel steering angle.

The method for vehicle control described in connection with Fig. 1 may receive a continuous variation range of a lateral dynamics-related parameter through a user interface of the vehicle, and implement a user-customized continuous adjustment of the lateral dynamics of the vehicle through rear wheel steering based on the received continuous variation range of the lateral dynamics-related parameter. In this way, the user-customized continuous adjustment of the lateral dynamics of the vehicle can be achieved without affecting the driver's front wheel steering input, thereby meeting different users' requirements for driving dynamics and improving the user's driving experience.

Fig. 4 is an example flowchart for determining the rear wheel steering angle of the vehicle according to the embodiment of the present disclosure. In the example method shown in Fig. 4, the rear wheel steering angle of the vehicle is determined based on parameters in the state space equation of the vehicle, such as the vehicle wheelbase and the vehicle stability factor, which affect the lateral dynamics of the vehicle (e.g., the turning radius and agility of the vehicle, etc.).

The vehicle wheelbase and the vehicle stability factors affect the lateral dynamics of the vehicle, such as the turning radius and agility. In summary, under the same conditions otherwise, the greater the vehicle wheelbase, the greater the turning radius of the vehicle and the lower the agility of the vehicle; and conversely, the smaller the vehicle wheelbase, the smaller the turning radius of the vehicle and the higher the agility of the vehicle. Under the same conditions otherwise, the larger the vehicle stability factor, the larger the turning radius of the vehicle and the lower the agility of the vehicle; and conversely, the smaller the vehicle stability factor, the smaller the turning radius of the vehicle and the higher the agility of the vehicle. For example, in a case where the vehicle stability factor is greater than 0, the vehicle is understeered, the turning radius of the vehicle increases as the speed increases, and the stability is good. In a case where the vehicle stability factor is equal to 0, the vehicle is in neutral steering and the turning radius remains constant regardless of speed. In a case where the vehicle stability factor is less than 0, the vehicle is oversteered, the vehicle turning radius decreases as the speed increases, agility increases, but stability decreases.

The method shown in Fig. 4 starts at step S410. At step S410, at least one of a desired vehicle wheelbase and a desired vehicle stability factor corresponding to the current state of the vehicle is determined based on the received continuous variation ranges of the lateral dynamics related parameter and the longitudinal dynamics parameter and the current state of the vehicle. In one embodiment, a mapping table of the possible continuous variation range of the lateral dynamics-related parameter, the possible continuous variation range of the longitudinal dynamics parameter, and the state of the vehicle to the desired vehicle wheelbase and/or the desired vehicle stability factor may be constructed by a method such as testing, and then based on the received continuous variation ranges of the lateral dynamics-related parameter and the longitudinal dynamics parameter and the current state of the vehicle, the desired vehicle wheelbase and/or the desired vehicle stability factor corresponding to the current state of the vehicle is determined by looking up the mapping table.

Exemplarily, assuming that the continuous variation range of the lateral dynamics-related parameter that the user can input is la-rang 1, la-rang 2, ... , la-rang N, the continuous variation range of the longitudinal dynamics parameter that the user can input is lo-rang 1, lo-rang 2, ... , lo-rang M, the possible states of the vehicle are: St 1, St 2, ... , St Q, then the mapping table shown in Table 1 below can be constructed, h*ᵢⱼₖ, i* = 1 ... N, j = 1 ... M, k = 1 ... Q represents the desired vehicle wheelbase when the input of the lateral dynamics-related parameter of the vehicle is la-rang i, the input of the longitudinal dynamics parameter of the vehicle is lo-rang j, and the current state of the vehicle is St; and K*ᵢⱼₖ, i* = 1 ... N, j = 1 ... M, k = 1 ... Q represents the desired vehicle stability factor when the input of the lateral dynamics-related parameter of the vehicle is la-rang i, the input of the longitudinal dynamics parameter of the vehicle is lo-rang j, and the current state of the vehicle is St.

**Table 1**

| | la-rang 1, lo-rang 1 | la-rang 1, lo-rang 2 | ... | la-rang 2, lo-rang 1 | ... | la-rang N, lo-rang M |
|---|---|---|---|---|---|---|
| St 1 | *h₁₁₁, K₁₁₁* | *h₁₂₁, K₁₂₁* | ... | *h₂₁₁, K₂₁₁* | ... | *h_{NM1}, K_{NM1}* |
| St 2 | *h₁₁₂, K₁₁₂* | *h₁₂₂, K₁₂₂* | ... | *h₂₁₂, K₂₁₂* | ... | *h_{NM2}, K_{NM2}* |
| ... | ... | ... | ... | ... | ... | ... |
| St P | *h_{11P}, K_{11P}* | *h_{12P}, K_{12P}* | ... | *h_{21P}, K_{21P}* | ... | *h_{NMP}, K_{NMP}* |

In another embodiment, the correspondence between the desired vehicle wheelbase and/or the desired vehicle stability factor and the longitudinal dynamics parameter may first be determined based on the received continuous variation range of the lateral dynamics related parameter and the longitudinal dynamics parameter, and then based on the current state of the vehicle (specifically the current value of the longitudinal dynamics parameter or the related parameter among the parameters representing the current state of the vehicle), the desired vehicle wheelbase and/or the desired vehicle stability factor corresponding to the current state of the vehicle is determined according to the correspondence.

Exemplarily, in one embodiment, the lateral dynamics-related parameter may be the vehicle wheelbase (i.e., the desired vehicle wheelbase), and the longitudinal dynamics parameter may be the vehicle speed. In this embodiment, the desired vehicle wheelbase corresponding to the current state of the vehicle may be determined based on the following method comprising: based on the received continuous variation range of the desired vehicle wheelbase and the continuous variation range of the vehicle speed, determining the correspondence between the desired vehicle wheelbase and the vehicle speed; and then based on the current vehicle speed of the vehicle, according to the correspondence, determining the desired vehicle wheelbase corresponding to the current vehicle speed. In this example, the desired vehicle wheelbase and the vehicle speed may be a linear positive correlation, for example, as shown in the following equation:
$h = a 0 ∗ v + b 0$
$a 0 = \frac{{h}_{ie} - {h}_{is}}{{v}_{ie} - {v}_{is}}$
$b 0 = {h}_{is} - \frac{{h}_{ie} - {h}_{is}}{{v}_{ie} - {v}_{is}} {v}_{is}$

Where, h represents the desired vehicle wheelbase, v represents the vehicle speed, *hᵢₛ* is the starting value of the desired vehicle wheelbase range input by the user, *hᵢₑ* is the ending value of the desired vehicle wheelbase range input by the user, *vᵢₛ* is the starting value of the vehicle speed range input by the user, *vᵢₑ* is the ending value of the vehicle speed range input by the user.

Exemplarily, the user may input a desired vehicle wheelbase ranging between *hₘᵢₙ* and *hₘₐₓ,* where *h*ₘᵢₙ represents a minimum value of the desired vehicle wheelbase and *hₘₐₓ* represents a maximum value of the desired vehicle wheelbase. *hₘᵢₙ* and *hₘₐₓ* may be reasonable values applicable to the current vehicle, which may be determined (e.g., by a testing method) based on the actual vehicle wheelbase and vehicle mass of the vehicle, etc. In one example, *h*ₘᵢₙ may be equal to 2m and *hₘₐₓ* may be equal to 6m.

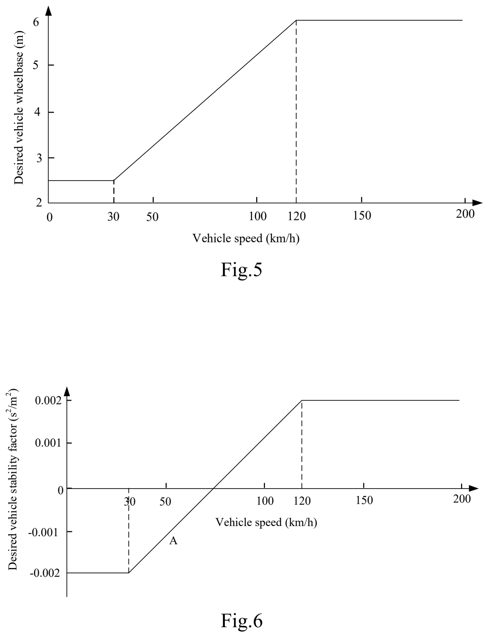

Alternatively, the correspondence between the desired vehicle wheelbase and the vehicle speed may be piecewise, for example, as shown in Fig. 5. That is, when the vehicle speed is less than or equal to the first threshold, the desired vehicle wheelbase is the first predetermined desired vehicle wheelbase; when the vehicle speed is greater than the first threshold and less than the second threshold, the desired vehicle wheelbase and the vehicle speed have a linear positive correlation; and when the vehicle speed is greater than the second threshold, the desired vehicle wheelbase is a second predetermined desired vehicle wheelbase, wherein the first predetermined desired vehicle wheelbase is shorter than the second predetermined desired vehicle wheelbase. For example, as shown in the following equation:
$h = \left\{\begin{matrix}{h}_{min} v \leq v 1 \\ a 1 ∗ v + b 1 v 1 < v < v 2 \\ {h}_{max} v \geq v 2\end{matrix}\right.$
$a 1 = \frac{{h}_{ie} - {h}_{min}}{{v}_{ie} - v 1}$
$b 1 = {h}_{min} - \frac{{h}_{ie} - {h}_{min}}{{v}_{ie} - {v}_{1}} {v}_{1}$

Where, h represents the desired vehicle wheelbase, v represents the vehicle speed, *h*ₘᵢₙ represents the minimum value of the desired vehicle wheelbase, *hₘₐₓ* represents the maximum value of the desired vehicle wheelbase, v1 and v2 are constants greater than 0, *hᵢₑ* is the ending value of the desired vehicle wheelbase range input by the user, and *vᵢₑ* is the ending value of the vehicle speed range input by the user. In one embodiment, v1 may be 30km/h and v2 may be 120km/h.

Compared to the correspondence between the desired vehicle wheelbase and the vehicle speed shown in equations 1-3 above, the piecewise correspondence between the desired vehicle wheelbase and vehicle speed described above, for example in equations 4-6, sets a threshold value of the desired vehicle wheelbase for vehicle speed, so that the vehicle is not too flexible at the low speed and too clumsy at the high speed, so that the user-customized continuous variation of the lateral dynamics-related parameter can be met in a safer manner. Additionally, in an example where the correspondence between the desired vehicle wheelbase and the vehicle speed may be piecewise, the input range of the vehicle speed may be limited. For example, the user can only input a vehicle speed range between *v*1 and *v*2, thereby simplifying the process.

In another embodiment, the lateral dynamics-related parameter may be the turning radius of the vehicle (i.e., the desired turning radius), and the longitudinal dynamics parameter may be the vehicle speed. In this embodiment, the continuous variation range of the desired vehicle wheelbase may first be determined based on the received continuous variation range of the desired turning radius. For example, the desired vehicle wheelbase h may be determined based on the desired turning radius r, based on,
$h = a 2 ∗ r$

Where, *a*2 can be a constant greater than 0, for example equal to 3/4, and r represents the desired turning radius.

After the continuous variation range of the desired vehicle wheelbase is determined, the correspondence between the desired vehicle wheelbase and the vehicle speed can be determined based on the method shown above. Compared with the user inputting the desired vehicle wheelbase and determining the correspondence between the desired vehicle wheelbase and the vehicle speed, the user inputting the desired turning radius and then determining the correspondence between the desired vehicle wheelbase and the vehicle speed based on the desired turning radius can facilitate the user's understanding of the input parameter, since ordinary users may be less able to understand the relationship between the desired vehicle wheelbase and the lateral dynamics of the vehicle, thus improving user's experience. In addition, the input range of the desired turning radius can be limited at the user interface to simplify processing and increase safety. The range may be a reasonable radius range for the current vehicle to make a turn.

After the correspondence between the desired vehicle wheelbase and vehicle speed is determined, the desired vehicle wheelbase corresponding to the current state of the vehicle may be determined based on the current state of the vehicle (which may be, for example, the current vehicle speed of the vehicle) according to the determined correspondence (such as equation (1) or (4) above).

Additionally or alternatively, the lateral dynamics related parameter may be the vehicle stability factor (i.e., the desired vehicle stability factor) and the longitudinal dynamics parameter may be the vehicle speed. In this case, the correspondence between the desired vehicle stability factor and the vehicle speed may be determined in a method similar to the above-mentioned determination of the correspondence between the desired vehicle wheelbase and the vehicle speed. Exemplarily, the desired vehicle stability factor and vehicle speed may be a linear positive correlation, for example, as shown in the following equation:
$K = a 3 ∗ v + b 3$
$a 3 = \frac{{K}_{ie} - {K}_{is}}{{v}_{ie} - {v}_{is}}$
$b 3 = {K}_{is} - \frac{{K}_{ie} - {K}_{is}}{{v}_{ie} - {v}_{is}} {v}_{is}$

Where K represents the desired vehicle stability factor, v represents the vehicle speed, *Kᵢₛ* the starting value of the desired vehicle stability factor range input by the user, *Kᵢₑ* is the ending value of the desired vehicle stability factor range input by the user, *vᵢₛ* is the starting value of the vehicle speed range input by the user, and *vᵢₑ* is the ending value of the vehicle speed range input by the user. Similarly, the input range of the desired vehicle stability factor may also be limited (which may be a reasonable range applicable to the current vehicle). For example, the input range of the desired vehicle stability factor may be-0.01 *s*²/*m*² to 0.01 *s*²/*m*².

The correspondence between the desired vehicle stability factor and the vehicle speed may be piecewise, for example, as shown in Fig. 6. That is: when the vehicle speed is less than or equal to the third threshold, the desired vehicle stability factor is the first predetermined desired vehicle stability factor; when the vehicle speed is greater than the third threshold and less than the fourth threshold, the desired vehicle stability factor and the vehicle speed have a linear positive correlation; and when the vehicle speed is greater than the fourth threshold, the desired vehicle stability factor is a second predetermined desired vehicle stability factor, wherein the first predetermined desired vehicle stability factor is less than the second predetermined desired vehicle stability factor. For example, as shown in the following equation:
$K = \left\{\begin{matrix}{K}_{min} v \leq v 3 \\ a 4 ∗ v + b 4 v 3 < v < v 4 \\ {K}_{max} v \geq v 4\end{matrix}\right.$
$a 4 = \frac{{K}_{ie} - {K}_{min}}{{v}_{ie} - v 3}$
$b 1 = {K}_{min} - \frac{{K}_{ie} - {K}_{min}}{{v}_{ie} - {v}_{3}} {v}_{3}$

Where K represents the desired vehicle stability factor, v represents a vehicle speed, *Kₘᵢₙ* represents a minimum value of the desired vehicle stability factor, *Kₘₐₓ* represents a maximum value of the desired vehicle stability factor, v3 and v4 are constants greater than 0, *Kᵢₑ* is an ending value of the desired vehicle stability factor range input by a user, and *vᵢₑ* is an ending value of the vehicle speed range input by a user. In the present disclosure, v3 may be the same as or different from v1 described above, and v4 may be the same as or different from v2 described above.

Alternatively, in another embodiment, the lateral dynamics-related parameter may be the agility of the vehicle (i.e., the desired agility) and the longitudinal dynamics parameter may be the vehicle speed. In this embodiment, a continuous variation range of the desired vehicle stability factor may first be determined based on the received continuous variation range of the desired agility. For example, the continuous variation range of the desired vehicle stability factor may be determined based on the continuous variation range of the desired agility according to,
$K = a 5 ∗ Ag + K 0$

Where K represents the desired vehicle stability factor, a5 may be a constant less than 0, K0 is a constant, and Ag represents the desired agility. When the desired agility is input by a percentage (e.g., the range of desired agility input by the user is 20% to 80%), for example, *a*5 may be -0.04 and K0 may be 0.006. After the continuous variation range of the desired vehicle stability factor is determined, the correspondence between the desired vehicle stability factor and the vehicle speed can be determined based on the method shown above.

Compared with the user inputting the desired vehicle stability factor, the user inputting the desired agility can facilitate the user to understand the input parameter and improve the user's experience. Similarly, the input range of the desired agility can also be limited to simplify processing and increase security.

After the correspondence between the desired vehicle stability factor and the vehicle speed is determined, the desired vehicle stability factor corresponding to the current state of the vehicle may be determined based on the current state of the vehicle (which may be, for example, the current vehicle speed of the vehicle) according to the determined correspondence between the desired vehicle stability factor and the vehicle speed (e.g., by the above equation (8) or (11)).

At step S420, based on the determined desired vehicle wheelbase and/or desired vehicle stability factor and the current state of the vehicle, the rear wheel steering angle of the vehicle is determined. In one embodiment, a mapping table of the desired vehicle wheelbase and/or the desired vehicle stability factor and the state of the vehicle to the rear wheel steering angle may be pre-constructed (e.g., by testing), and then the rear wheel steering angle is determined by looking up the mapping table using the determined desired vehicle wheelbase and/or desired vehicle stability factor and the current state of the vehicle.

In another embodiment, a virtual reference vehicle corresponding to the current state of the vehicle may be determined based on the determined desired vehicle wheelbase and/or desired vehicle stability factor. The rear wheel steering angle is then determined based on the relevant parameters of the virtual reference vehicle and the current state of the vehicle (i.e., the real vehicle) (via the kinematic equations of the vehicle). In this disclosure, the virtual reference vehicle may be a kinematic model of the vehicle. Accordingly, the above-mentioned determination of the virtual reference vehicle may be to set the vehicle wheelbase and/or the vehicle stability factor involved in the kinematic model of the vehicle to the determined desired vehicle wheelbase and desired vehicle stability factor corresponding to the current state of the real vehicle. The virtual reference vehicle may, for example, be a virtual reference vehicle whose rear wheels are non-rotatable in the lateral direction of the vehicle or a virtual reference vehicle whose rear wheels are rotatable in the lateral direction of the vehicle.

In the following, the rear wheel steering angle is determined based on the virtual reference vehicle whose rear wheels cannot rotate in the lateral direction of the vehicle, which can better achieve the user-customized continuous variation of the lateral dynamics with fewer calculations. This is because the driver can directly control the steering(s) of the front wheel(s) in the lateral direction of the vehicle (e.g., by turning the steering wheel), but cannot directly control the steering(s) of the rear wheel(s) in the lateral direction of the vehicle, so the driver's real driving intention (e.g., the steering wheel angle) can be directly reflected by the virtual reference vehicle that does not take into account the rear wheel steering angle, so that user-customized continuous variation of lateral dynamics can be better achieved.

Specifically, the yaw angular acceleration, yaw rate, side-slip angular velocity of the center of mass, and side-slip angle of the center of mass of the virtual reference vehicle may be determined based on the relevant parameters of the virtual reference vehicle according to the state space equation of the vehicle as shown in equation 15 below,
$\left[\begin{matrix}\dot{β} \\ \dot{r}\end{matrix}\right] = \left[\begin{matrix}\frac{- \left({K}_{1}+{K}_{2}\right)}{mν} & \frac{- {aK}_{1} + {bK}_{2} - {mν}^{2}}{{mν}^{2}} \\ \frac{- {aK}_{1} + {bK}_{2}}{{I}_{z}} & \frac{- \left({a}^{2}{K}_{1}+{b}^{2}{K}_{2}\right)}{{I}_{z} ν}\end{matrix}\right] ∗ \left[\begin{matrix}β \\ r\end{matrix}\right] + \left[\begin{matrix}\frac{{K}_{1}}{mν} \\ \frac{{aK}_{1}}{{I}_{z}}\end{matrix}\right] ∗ {δ}_{f}$

Where *ṙ* represents the yaw angular acceleration, *r* represents the yaw rate, *β̇* represents the side-slip angular velocity of the center of mass, *β* represents the side-slip angle of the center of mass, K₁ represents a cornering stiffness of the front axle of the vehicle, K₂ represents a cornering stiffness of the rear axle of the vehicle, *a* represents a distance from the center of mass of the vehicle to the front axle, *b* represents a distance from the center of mass of the vehicle to the rear axle, *m* represents a mass of the vehicle, *ν* represents a vehicle speed, *I_{z}* represents a moment of inertia of the vehicle, and *δ_{f}* represents a front wheel steering angle.

If the desired vehicle wheelbase corresponding to the current state of the vehicle is determined at step S410, then in the above equation (15), except for *a* and *b*, other parameters may be the same as those of the real vehicle. If the stability factor corresponding to the current state of the vehicle is determined at step S410, then in the above equation (15), except for K₁ and K₂, other parameters may be the same as those of the real vehicle. If both the desired vehicle wheelbase and the desired vehicle stability factor corresponding to the current state of the vehicle are determined at step S410, then in equation (15) above, except for *a*, *b,* K1 and K2, other parameters can be the same as the real vehicle.

The distance *a* from the center of mass to the front axle and the distance *b* from the center of mass to the rear axle of the virtual reference vehicle may be determined from the desired vehicle wheelbase h determined at step S410. Exemplarily, the distance *a* from the center of mass to the front axle and the distance *b* from the center of mass to the rear axle of the virtual reference vehicle may be determined based on the desired vehicle wheelbas*a*e h determined at step S410 and the ratio of the distance *a* from the center of mass to the front axle to the distance *b* of the center of mass to the rear axle. Exemplarily, the ratio of the distance *a* from the center of mass of the virtual reference vehicle to the front axle to the distance *b* from the center of mass to the rear axle may be a predetermined fixed value. The predetermined fixed value may, for example, be the ratio of the distance from the center of mass of the real vehicle to the front axle to the distance from the center of mass to the rear axle.

The cornering stiffness K₁ of the front axle and the cornering stiffness K₂ of the rear axle of the virtual reference vehicle may be determined based on the desired vehicle stability factor K determined at step S410. Exemplarily, the cornering stiffness K₁ of the front axle and the cornering stiffness K₂ of the rear axle of the virtual reference vehicle may be determined based on the desired vehicle stability factor K determined at step S410 and the ratio f of the cornering stiffness of the front axle to the cornering stiffness of the rear axle of the virtual reference vehicle. For example, K₁ and K₂ can be determined by solving equations (16) and (17) as follows,
$K = m ∗ \left(\frac{a}{{K}_{2}}-\frac{b}{{K}_{1}}\right) / {h}^{2}$
${K}_{1} = f * {K}_{2}$

Where K represents the stability factor of the virtual reference vehicle, m represents the mass of the virtual reference vehicle (the same as the mass of the real vehicle), *a* represents the distance of the center of mass of the virtual reference vehicle to the front axle, *b* represents the distance of the center of mass of the virtual reference vehicle to the rear axle, h represents the vehicle wheelbase of the virtual reference vehicle, and f represents the ratio of the cornering stiffness of the front axle to the cornering stiffness of the rear axle of the virtual reference vehicle.

h, *a* and b can be determined by the aforementioned method. Regarding f, in an embodiment, f may be a fixed value. In another embodiment, f may be a variable value determined based on the stability factor K of the virtual reference vehicle. That is, f varies as K varies. For example, f may be greater than 1 (e.g., between 1.1-1.3) when K of the virtual reference vehicle is greater than 0 (i.e., oversteer); f may be equal to 1 when K of the virtual reference vehicle is equal to 0 (i.e., neutral steering); and f may be less than 1 (e.g., between 0.6-0.9) when K of the virtual reference vehicle is less than 0 (i.e., understeer). Compared to f being a fixed value (e.g., fixed to f of the real vehicle), f determined based on the stability factor of the virtual reference vehicle may be more applicable to the current state of the vehicle and the continuous variation range of the lateral dynamics-related parameter input by the user, so that the rear wheel steering angle finally determined based on f may better achieve the user-customized continuous variation of the lateral dynamics.

Regarding the determination of the yaw angular acceleration, the yaw rate, the side-slip angular velocity of the center of mass, and the side-slip angle of the center of mass of the virtual reference vehicle based on the above equation (15), in practice, the determination can be performed by the following numerical method. First, the side-slip angular velocity *β̇* of the center of mass of the virtual reference vehicle can be determined through an iterative method based on the following equation (18),
${\dot{β}}_{t + 1} = \frac{{F}_{yf} + {F}_{yr}}{mv} - {r}_{t}$

And the yaw angle acceleration *ṙ* of the virtual reference vehicle is determined by equation (19) as follows,
$\dot{r} = \frac{{aF}_{yf} - {bF}_{yr}}{{I}_{z}}$

Where *F_{yf}* represents a cornering force of the front axle of the virtual reference vehicle; *F_{yr}* represents a cornering force of the rear axle of the virtual reference vehicle; m represents the mass of the virtual reference vehicle (the same as the mass of the real vehicle); v represents the vehicle speed of the virtual reference vehicle (the same as the vehicle speed of the real vehicle); *rₜ* represents the yaw rate of the virtual reference vehicle, and its initialization value (*r*₀) is 0; *a* represents the distance from the center of mass of the virtual reference vehicle to the front axle determined above; b represents the distance from the center of mass of the virtual reference vehicle to the rear axle determined above; and *I_{z}* represents the vehicle moment of inertia of the virtual reference vehicle (same as the vehicle moment of inertia of the real vehicle).

*F_{yf}* and *F_{yr}* in the above equations (18) and (19) can be determined based on the above-determined cornering stiffness K₁ of the front axle and cornering stiffness K₂ of the rear axle. Exemplarily, *F_{yf}* and *F_{yr}* can be determined by the following equations:
${F}_{yf} = 2 {K}_{1} {a}_{f}$
${F}_{yr} = 2 {K}_{2} {a}_{r}$

Where *F_{yf}* represents the cornering force of the front axle of the virtual reference vehicle, *K*₁ represents the above determined cornering stiffness of the front axle of the virtual reference vehicle, *a_{f}* represents the front wheel slip angle of the virtual reference vehicle (the same as the front wheel slip angle of the real vehicle); *F_{yr}* represents the cornering force of the rear axle of the virtual reference vehicle, *K*₂ represents the above determined cornering stiffness of the rear axle of the virtual reference vehicle, *a_{f}* represents a rear wheel slip angle of the virtual reference vehicle. Regarding the rear wheel slip angle *a_{f}* of the virtual reference vehicle, for the virtual reference vehicle used in this embodiment whose rear wheels are non-rotatable in the lateral direction of the vehicle, the determination does not take into account the rear wheel steering angle of the real vehicle. For a virtual reference vehicle whose rear wheels can rotate in the lateral direction of the vehicle, the determination takes into account the rear wheel steering angle of the real vehicle.

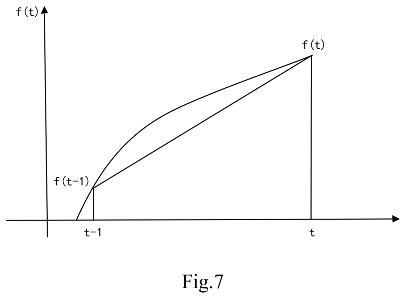

Then, the side-slip angle *β* and the yaw rate *r* of the center of mass are determined by integrating the determined side-slip angular velocity *β̇* and the yaw angular acceleration *ṙ* of the center of mass through the second-order Runge-Kutta integral. The principle of the second-order Runge-Kutta integration is shown in Fig. 7, that is, the value s of the change in the function F(t) from the previous time t-1 to the current time t is represented by the area of the trapezoid (t-1, t, f(t), f(t-1)) formed by the derivative f(t) of the function F(t) at the previous time t-1 and the current time t, and then the value of the function F(t) at time t can be obtained by adding the change s to the value of the function F(t) at the previous time t-1. Taking the calculation of the yaw rate as an example, the value of r at time t-1 is rₜ₋₁, and the values of the derivative *ṙ* of r at time t-1 and t are *ṙ*_{*t*-1} and *ṙₜ* respectively. Then the value rₜ of r at time t can be determined by the following equation.
${r}_{t} = {r}_{t - 1} + \frac{hi \left(ai+bi\right)}{2}$
$hi = t - \left(t-1\right)$
$ai = {\dot{r}}_{t - 1}$
$bi = {\dot{r}}_{t}$

Thereafter, the rear wheel steering angle is determined based on the determined yaw angular acceleration, yaw rate, side-slip angular velocity of the center of mass, and side-slip angle of the center of mass. Exemplarily, in one embodiment, the determination may be made based on a moment equilibrium equation. Exemplarily, the rear wheel steering angle *δᵣ* can be determined by the following equation,
${δ}_{r} = β - \frac{b}{v} r + \frac{{I}_{z} \dot{r} - {aF}_{yf}}{{bC}_{r}}$

Where *β* represents the above determined side-slip angle of the center of mass, b represents a distance from the center of mass of the real vehicle (not the virtual reference vehicle determined above) to the rear axle, v represents the vehicle speed of the real vehicle, r represents the above determined yaw rate, I_{z} is the moment of inertia of the real vehicle, *ṙ* represents the above determined yaw angular acceleration, *a* represents the distance from the center of mass of the real vehicle to the front axle, *F_{yf}* represents the cornering force of the front axle of the real vehicle, and Cᵣ represents the cornering stiffness of the rear axle of the real vehicle. In this example, the vehicle speed v and the cornering force *F_{yf}* of the front axle of the real vehicle can represent the current state of the vehicle.

In another embodiment, the rear wheel steering angle may be determined based on the above determined side-slip angular velocity of the center of mass, side-slip angle of the center of mass, and the yaw rate based on a force equilibrium equation. Exemplarily, the rear wheel steering angle *δᵣ* can be determined by the following equation,
${δ}_{r} = - \frac{mv \left(\dot{β}+r\right) - {F}_{f}}{{C}_{r}} + β - \frac{b}{v} r$

Where *β̇* represents the above determined side-slip angular velocity of the center of mass, *β* represents the above determined side-slip angle of the center of mass, r represents the above determined yaw rate, m represents the mass of the real vehicle, v represents the vehicle speed of the real vehicle, *F_{f}* represents a lateral force of front wheel of the real vehicle, *Cᵣ* represents the cornering stiffness of the rear axle of the real vehicle, and b represents a distance from the center of mass of the real vehicle to the rear axle. The vehicle speed v and the lateral force *F_{f}* of front wheel of the real vehicle can represent the current state of the vehicle.

Methods for determining the rear wheel steering angle based on the desired vehicle wheelbase and/or the desired vehicle stability factor are described above in connection with Figs. 4-7. It should be understood that the above-described embodiments are only examples and are not limiting. For example, although the above-mentioned correspondence between the desired vehicle wheelbase and the desired vehicle stability factor and the vehicle speed, the correspondence between the desired turning radius and the desired vehicle wheelbase, and the correspondence between the desired agility and the desired vehicle stability factor are linear relationships, one or more of the correspondence between the desired vehicle wheelbase and the vehicle speed, the correspondence between the desired turning radius and the desired vehicle wheelbase, the correspondence between the desired vehicle stability factor and the vehicle speed, and the correspondence between the desired agility and the desired vehicle stability factor may also be non-linear relationships. For another example, although in the above, the determination of the correspondence between the desired vehicle wheelbase and vehicle speed is based on the desired vehicle wheelbase and/or the desired turning radius, and the determination of the correspondence between the desired vehicle stability factor and vehicle speed is based on the desired vehicle stability factor and/or the desired agility, the correspondence between the desired vehicle wheelbase and vehicle speed may additionally or alternatively be based on the desired agility or the desired stability factor, and the correspondence between the desired vehicle stability factor and vehicle speed may additionally or alternatively be based on the desired vehicle wheelbase and the desired turning radius. For example, the correspondence between the desired agility (or the desired stability factor) and the desired vehicle wheelbase can be determined in advance through testing or the like, then the continuous variation range of the desired vehicle wheelbase can be determined based on the continuous variation range of the desired agility (or the desired stability factor) input by the user, and then the correspondence between the desired vehicle wheelbase and vehicle speed is determined. That is, in the present disclosure, at least one of the desired vehicle wheelbase and the desired vehicle stability factor may be determined based on the desired turning radius and/or the desired agility, and then the correspondence between the desired vehicle wheelbase and the vehicle speed and/or the correspondence between the desired vehicle stability factor and the vehicle speed may be determined.

In methods for determining the rear wheel steering angle of the vehicle based on the desired vehicle wheelbase and/or the desired vehicle stability factor, as described above in connection with Figs. 4-7, the lateral dynamics-related parameter(s) which may be multiple parameters input by the user, are converted into two parameters-the desired vehicle wheelbase and/or the desired vehicle stability factor, and the rear wheel steering angle is determined based on these two parameters, so that the user-customized continuous variation of the lateral dynamics can be well achieved in a simple manner. In addition, the determination of the rear wheel steering angle by virtual reference vehicle modeling of the current state of the vehicle can greatly reduce the workload of the vehicle engineer compared to the method for determining the rear wheel steering angle of the vehicle based on the mapping table, since the vehicle engineer is not required to construct the mapping table through extensive testing or debugging. Further, the method for determining the rear wheel steering angle based on virtual reference vehicle modeling doesn't need to store the mapping table in the vehicle, so the storage space of the vehicle can be greatly saved.

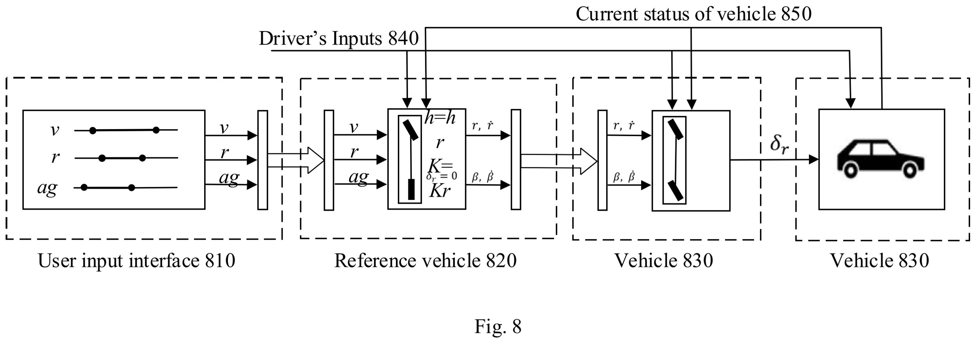

Fig. 8 is an example system diagram of a method for vehicle control according to an embodiment of the present disclosure. As shown in Fig. 8, a user may input a continuous variation range of the lateral dynamics-related parameter of the vehicle (e.g., the turning radius r and the agility Ag of the vehicle) and a continuous variation range of the longitudinal dynamics parameter (e.g., the vehicle speed v) through a user input interface 810 (e.g., the user interface shown in Fig. 3A or Fig. 3B). Then, a desired vehicle wheelbase hr and a desired vehicle stability factor Kr corresponding to the current state of the vehicle are determined based on the continuous variation range of the lateral dynamic-related parameter and the continuous variation range of the longitudinal dynamics parameter input by the user, and then a virtual reference vehicle 820 corresponding to the vehicle, whose rear wheels are not rotatable in the lateral direction of the vehicle (i.e., *δᵣ* = 0) and whose vehicle wheelbase and vehicle stability factor are equal to the determined desired vehicle wheelbase hr and desired vehicle stability factor Kr, respectively, is determined. Thereafter, the rear wheel steering angle *δᵣ* of the vehicle 830 (i.e., the real vehicle) is determined based on the relevant parameters of the virtual reference vehicle and the current state of the vehicle, and finally the vehicle 830 is controlled based on the determined rear wheel steering angle *δᵣ* and user inputs (e.g., steering wheel steering angle, etc.).

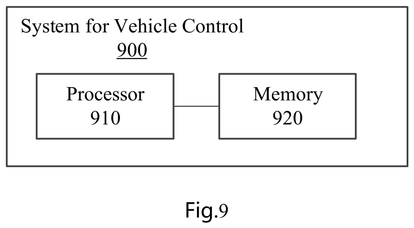

In the above, the present disclosure describes a method for vehicle control according to an embodiment of the present disclosure in conjunction with Figs. 1-8. Hereinafter, the present disclosure will describe a system, a computer-readable storage medium, a computer program product for vehicle control, and a vehicle according to an embodiment of the present disclosure in conjunction with Fig. 9.

Fig. 9 illustrates an example system 900 for vehicle control according to an embodiment of the present disclosure. As shown in Fig. 9, the example system 900 for vehicle control according to the embodiment of the present disclosure may include a processor 910 and a memory 920. The memory 920 has instructions (ie, computer programs) stored thereon. The processor 910 executes the instructions to implement the method according to the embodiment of the present disclosure (for example, method 100, etc.).

In addition, the present disclosure also provides a system for vehicle control, including: means for performing steps of a method according to an embodiment of the present disclosure. For example, the system comprises means for receiving a continuous variation range of a lateral dynamics-related parameter of the vehicle; means for determining a rear wheel steering angle of the vehicle based on the continuous variation range of the lateral dynamics-related parameter and a current state of the vehicle; and means for controlling steering of rear wheels of the vehicle based on the determined rear wheel steering angle.

In addition, the present disclosure also provides a computer-readable storage medium on which instructions are stored. When executed by a processor, the instructions implement the steps of the method according to the embodiment of the present disclosure.

In addition, the present disclosure also provides a computer program product including instructions that, when executed by a processor, implement the steps of the method according to the embodiment of the present disclosure.

In addition, the present disclosure also provides a vehicle that may comprise a user interface (e.g., the user interfaces shown in Figs. 3A and 3B) for receiving a continuous variation range of a lateral dynamics-related parameter of the vehicle, and a system for vehicle control according to the embodiment of the present disclosure.

So far, the present disclosure has described a method, a system, a computer-readable storage medium, a computer program product for vehicle control, and a vehicle according to an embodiment of the present disclosure in conjunction with Figs. 2-9. The method for vehicle control according to the embodiment of the present disclosure achieves the user-customized continuous adjustment of the lateral dynamics of the vehicle through the rear wheel steering, which can achieve the user-customized continuous adjustment of the lateral dynamics of the vehicle without affecting the driver's front wheel steering input, thereby meeting different users' requirements for driving dynamics and improving the user's driving experience. In determining the rear wheel steering angle, the method for determining the rear wheel steering angle based on the desired vehicle wheelbase and/or the desired vehicle stability factor of the present disclosure converts the lateral dynamics-related parameter(s) input by the user, which may be multiple parameters, into the two parameters of the desired vehicle wheelbase and/or the desired vehicle stability factor, and determines the rear wheel steering angle based on the two parameters, so that the user-customized continuous variation of the lateral dynamics can be well achieved in a simple manner. In addition, the determination of the rear wheel steering angle by virtual reference vehicle modeling of the current state of the vehicle can greatly reduce the workload of vehicle engineers and save the storage space of the vehicle compared to the method for determining the rear wheel steering angle of the vehicle based on the mapping table.

It should be noted that the above description is only some embodiments of the present disclosure and an illustration of the technical principles used. For example, the equations involved in this disclosure are only examples and not limiting. Those skilled in the art should understand that the disclosure scope involved in this disclosure is not limited to technical solutions composed of specific combinations of the above technical features, but should also cover other technical solutions formed by any combination of the above technical features or equivalent features without departing from the above-disclosed concept. For example, a technical solution is formed by replacing the above features with technical features with similar functions to those disclosed in the present disclosure (but not a limitation).

Further, while operations are described in a particular order, this should not be understood as requiring that such operations be performed in the particular order shown or in sequential order. Under certain circumstances, multitasking and parallel processing may be advantageous. Likewise, while several specific implementation details are contained in the above discussion, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method for vehicle control, comprising:
receiving a continuous variation range of a lateral dynamics-related parameter of a vehicle;
determining a rear wheel steering angle of the vehicle based on the received continuous variation range of the lateral dynamics-related parameter and a current state of the vehicle; and
controlling steering of rear wheels of the vehicle based on the determined rear wheel steering angle.

2. The method of claim 1, further comprising:
receiving a continuous variation range of a longitudinal dynamics parameter of the vehicle,
wherein determining the rear wheel steering angle of the vehicle is further based on the continuous variation range of the longitudinal dynamics parameter.

3. The method of claim 2, wherein determining the rear wheel steering angle comprises:
determining at least one of a desired vehicle wheelbase or a desired vehicle stability factor corresponding to a current state of the vehicle, based on the received continuous variation ranges of the lateral dynamics-related parameter and the longitudinal dynamics parameter and the current state of the vehicle;
determining the rear wheel steering angle, based on the current state of the vehicle and at least one of the desired vehicle wheelbase or the desired vehicle stability factor.

4. The method of claim 3, wherein determining the rear wheel steering angle, based on the current state of the vehicle and at least one of the desired vehicle wheelbase or the desired vehicle stability factor, comprises:
determining a virtual reference vehicle corresponding to the current state of the vehicle, wherein rear wheels of the virtual reference vehicle cannot rotate in a lateral direction of the vehicle, and the virtual reference vehicle satisfies at least one of:
its vehicle wheelbase being equal to the determined desired vehicle wheelbase,
its vehicle stability factor being equal to the determined desired vehicle stability factor; and
determining the rear wheel steering angle based on relevant parameters of the virtual reference vehicle and the current state of the vehicle.

5. The method of claim 4, wherein determining the rear wheel steering angle based on the relevant parameters of the virtual reference vehicle and the current state of the vehicle comprises:
determining cornering stiffness of a front axle and cornering stiffness of a rear axle of the virtual reference vehicle, based on a vehicle stability factor of the virtual reference vehicle and a ratio of the cornering stiffness of the front axle to the cornering stiffness of the rear axle of the virtual reference vehicle,
wherein the ratio of the cornering stiffness of the front axle to the cornering stiffness of the rear axle of the virtual reference vehicle varies as the vehicle stability factor varies.

6. The method of claim 4 or 5, wherein determining the rear wheel steering angle based on the relevant parameters of the virtual reference vehicle and the current state of the vehicle comprises:
determining, based on the relevant parameters of the virtual reference vehicle and the current state of the vehicle:
a yaw angular acceleration, a yaw rate, and a side-slip angle of a center of mass of the virtual reference vehicle, or
a side-slip angular velocity of the center of mass, the side-slip angle of the center of mass, and the yaw rate of the virtual reference vehicle; and
determining the rear wheel steering angle, based on the yaw angular acceleration, the yaw rate, and the side-slip angle of the center of mass, or based on the side-slip angular velocity of the center of mass, the side-slip angle of the center of mass, and the yaw rate.

7. The method of any one of claims 3-6, wherein the lateral dynamics-related parameter comprises at least one of a turning radius and agility, and the longitudinal dynamics parameter comprises a vehicle speed, wherein determining at least one of the desired vehicle wheelbase and the desired vehicle stability factor comprises:
determining a continuous variation range of the desired vehicle wheelbase and/or a continuous variation range of the desired vehicle stability factor, based on the received continuous variation range of the turning radius and/or the continuous variation range of the agility;
determining, based on the continuous variation range of the desired vehicle wheelbase and/or the continuous variation range of the desired vehicle stability factor and a received continuous variation range of the vehicle speed, at least one of:
a correspondence between the desired vehicle wheelbase and the vehicle speed,
correspondence between the desired vehicle stability factor and the vehicle speed; and
determining, based on a current vehicle speed of the vehicle, the desired vehicle wheelbase and/or the desired vehicle stability factor corresponding to the current vehicle speed, according to the determined correspondence between the desired vehicle wheelbase and the vehicle speed and/or the determined correspondence between the desired vehicle stability factor and the vehicle speed.

8. The method of claim 7, wherein the correspondence between the desired vehicle wheelbase and the vehicle speed is:
the desired vehicle wheelbase is a first predetermined desired vehicle wheelbase when the vehicle speed is less than or equal to a first threshold,
the desired vehicle wheelbase and the vehicle speed have a linear positive correlation when the vehicle speed is greater than the first threshold and less than a second threshold, and
the desired vehicle wheelbase is a second predetermined desired vehicle wheelbase when the vehicle speed is greater than the second threshold,
wherein the first predetermined desired vehicle wheelbase is shorter than the second predetermined desired vehicle wheelbase.

9. The method of claim 7 or 8, wherein the correspondence between the desired vehicle stability factor and the vehicle speed is:
the desired vehicle stability factor is a first predetermined desired vehicle stability factor when the vehicle speed is less than or equal to a third threshold,
the desired vehicle stability factor and the vehicle speed have a linear positive correlation when the vehicle speed is greater than the third threshold and less than a fourth threshold, and
the desired vehicle stability factor is a second predetermined desired vehicle stability factor when the vehicle speed is greater than the fourth threshold,
wherein the first predetermined desired vehicle stability factor is less than the second predetermined desired vehicle stability factor.

10. A system for vehicle control, comprising:
means for receiving a continuous variation range of a lateral dynamics-related parameter of a vehicle;
means for determining a rear wheel steering angle of the vehicle based on the continuous variation range of the lateral dynamics-related parameter and a current state of the vehicle; and
means for controlling steering of rear wheels of the vehicle based on the determined rear wheel steering angle.

11. A system for vehicle control, comprising a memory having computer instructions stored thereon, and a processor configured to execute the instructions to implement the method of any one of claims 1-9.

12. A vehicle comprising:
a user interface for receiving a continuous variation range of a lateral dynamics-related parameter of the vehicle; and
a system for vehicle control according to claim 11.

13. A computer-readable storage medium having instructions stored thereon, which when executed by a processor, implement the method according to any one of claims 1-9.

14. A computer program product comprising instructions which, when executed by a processor, implement the method of any one of claims 1-9.
